# EUROPÄISCHE PATENTANMELDUNG

(11) **EP 3 536 185 A1**
(43) Veröffentlichungstag der Anmeldung: **11.09.2019**
(21) Anmeldenummer: 18160240.0
(22) Anmeldetag: 06.03.2018
(51) Int. Cl.: A43D 3/02, B29D 35/00, B25J 15/00

(54) **VERFAHREN ZUM HERSTELLEN VON SCHUHLEISTEN UND ADAPTEREINRICHTUNG FÜR DIE HERSTELLUNG VON SCHUHLEISTEN**

(71) Anmelder: Fagus-GreCon Greten GmbH & Co. KG, 31061 Alfeld (DE)
(72) Erfinder: Di Lorenzo, Epifanio, 31061 Alfeld/Leine (DE)
(74) Vertreter: Jabbusch, Matthias

(57) **Zusammenfassung**

Bei einem Verfahren zum Herstellen von Schuhleisten jeweils aus einem Kunststoffkörper, der spanabhebend zu bearbeiten ist, ist vorgesehen, dass auf dem Kunststoffkörper vor dessen Bearbeitung Bauteile einer Anschlagsplatte fest angeordnet werden und dass für die nachfolgende Bearbeitung eine Adaptereinrichtung für Werkzeugmaschinen eingesetzt wird, die lagefest an der Anschlagsplatte befestigt wird.

Eine Adaptereinrichtung für die Herstellung von Schuhleisten, insbesondere zur Verwendung in einem vorgenannten Verfahren zeichnet sich dadurch aus, dass sie als einteiliger plattenförmiger Baukörper ausgebildet ist, der an die Anschlagsplatte angepasste Abschnitte hat und der einen Anlagebereich für Werkzeugmaschinenaufnahmen aufweist.

## Beschreibung

Die Erfindung betrifft ein Verfahren zum Herstellen von Schuhleisten jeweils aus einem Kunststoffkörper, der spanabhebend zu bearbeiten ist. Die Erfindung betrifft des Weiteren eine Adaptereinrichtung für die Herstellung von Schuhleisten jeweils aus einem Kunststoffkörper, der spanabhebend zu bearbeiten ist, wobei dem Kunststoffkörper eine Anschlagsplatte zugeordnet ist, insbesondere zur Verwendung im vorgenannten Verfahren.

Schuhleisten werden für die Herstellung von Schuhen benötigt. Während sie früher und für Spezialfälle aus Holz, insbesondere aus Buchenholz, hergestellt wurden bzw. werden, wird heute üblicherweise Kunststoff für die Herstellung von Schuhleisten verwendet. Zum Einsatz kommen Kunststoffkörper, die grob der Ausbildung eines Schuhleistens in Übermaßen entsprechen. Diese Kunststoffkörper werden mit Werkzeugmaschinen spanabhebend bearbeitet, so dass der gewünschte Schuhleisten in Ausbildung und Größe hergestellt ist.

Im Stand der Technik werden an fertiggestellte Schuhleisten Anschlagsplatten montiert, mit denen der Schuhleisten später in der Schuhfertigung in verschiedenen Prozessen gehandhabt wird. Dabei verursacht die lagegerechte Zuordnung der Anschlagsplatte zum gefertigten Schuhleisten Schwierigkeiten hinsichtlich der richtigen Anordnung und Ausrichtung.

Der Erfindung liegt die Aufgabe zugrunde, ein Verfahren der eingangs genannten Gattung aufzuzeigen, das eine erleichterte und beschleunigte Fertigung von Schuhleisten ermöglicht. Weiterhin soll eine insbesondere bei diesem Verfahren verwendbare Adaptereinrichtung aufgezeigt werden.

Hinsichtlich des Verfahrens ist diese Aufgabe erfindungsgemäß dadurch gelöst, dass auf dem Kunststoffkörper vor dessen Bearbeitung Bauteile einer Anschlagsplatte fest angeordnet werden und dass für die nachfolgende Bearbeitung eine Adaptereinrichtung eingesetzt wird, die lagefest an der Anschlagsplatte befestigt wird.

Nach dem erfindungsgemäßen Verfahren wird bereits der Ausgangskunststoffkörper mit einer Anschlagsplatte ausgerüstet. Diese Anschlagsplatte wird somit als Ausgangspunkt der Fertigung genommen, da einem fertigen Schuhleisten ohnehin eine Anschlagsplatte zuzuordnen ist.

Die Handhabung des Kunststoffkörpers mit der bereits fest angeordneten Anschlagsplatte vor und während der nachfolgenden Bearbeitung erfolgt mit der erfindungsgemäß vorgesehenen Adaptereinrichtung. Diese Adaptereinrichtung ist eine Adaptereinrichtung für Werkzeugmaschinen, sie bewirkt vorteilhaft, dass der Kunststoffkörper mit Anschlagsplatte und Adaptereinrichtung in eine Werkzeugmaschine für die nachfolgende Bearbeitung einsetzbar ist. Dabei kann die Adaptereinrichtung den Ausgangspunkt für die Bearbeitung ausbilden, entsprechende Bearbeitungsschritte können ausgehend von der Adaptereinrichtung hinsichtlich Weite und Tiefe durchgeführt werden.

Nach Fertigung des Schuhleistens kann die Adaptereinrichtung wieder von der Anschlagsplatte abgenommen werden und für eine nächste Bearbeitung eines nächsten Schuhleistens eingesetzt werden. Die Anschlagsplatte verbleibt am Schuhleisten.

Nach dem erfindungsgemäßen Verfahren ist ein justiertes Aufbringen einer Anschlagsplatte auf einem gefertigten Schuhleisten nicht mehr notwendig. Die Bearbeitung wird umgedreht, sie erfolgt von der Anschlagsplatte aus.

Nach einer Weiterbildung des erfindungsgemäßen Verfahrens ist vorgesehen, dass eine Adaptereinrichtung mit einer zur Bauform der Anschlagsplatte kongruenten Bauform verwendet wird. Die kongruente Bauform einer Adaptereinrichtung kann sich an die Anschlagsplatte eng anschmiegen, um neben einer möglichen kraftschlüssigen Verbindung zwischen Adaptereinrichtung und Anschlagsplatte auch eine formschlüssige Verbindung zwischen beiden Bauteilen auszubilden. Der Schuhleisten mit der Anschlagsplatte wird über die Adaptereinrichtung in einer Werkzeugmaschine gehandhabt, dazu ist eine lagegenaue Zuordnung von Adaptereinrichtung und Anschlagsplatte notwendig.

Diese lagegenaue Zuordnung erfolgt nach einer Weiterbildung vorzugsweise dadurch, dass für die Befestigung der Adaptereinrichtung Befestigungsmittel der Anschlagsplatte eingesetzt werden. Insofern erfolgt eine enge Anlage, beispielsweise werden Befestigungsmittel der Anschlagsplatte gelöst und nach Anlegen der Adaptereinrichtung wiedereingesetzt. Die Adaptereinrichtung wird auf diese Weise mit dem Befestigungsmitteln der Anschlagsplatte mitbefestigt, dadurch sind eine Lagezuordnung und feste Haltung gewährleistet.

Separater Schutz wird beansprucht für die oben genannte Adaptereinrichtung. Diese ist nach der Erfindung dadurch gekennzeichnet, dass sie als einteiliger plattenförmiger Baukörper ausgebildet ist, der an die Anschlagsplatte angepasste Abschnitte hat und der einen Anlagebereich für Werkzeugmaschinenaufnahmen aufweist.

Die Adaptereinrichtung ist vereinfacht ausgebildet, nämlich als einteiliger plattenförmiger Baukörper. Die Anschlagsplatte am Schuhleisten kann durchaus aus mehreren Abschnitten bestehen, Schuhleisten werden regelmäßig klappbar ausgebildet.

Der Baukörper der Adaptereinrichtung hat an die Anschlagsplatte angepasste Abschnitte, um eine enge Anlage der Adaptereinrichtung an der Anschlagsplatte zu ermöglichen. Weiterhin hat der Baukörper einen Anlagebereich für eine Werkzeugmaschinenaufnahme. Über diesen Anlagebereich ist die Adaptereinrichtung in einer Werkzeugmaschinenaufnahme anordbar, über die Anschlagsplatte kann so ein Schuhleisten, der verfahrensgemäß bereits mit der Anschlagsplatte ausgerüstet ist, in der Werkzeugmaschine angeordnet und zum Beispiel spanabhebend bearbeitet werden.

Die Adaptereinrichtung ist plattenförmig ausgebildet, so dass sie bei einem Verwenden in der Werkzeugmaschine nicht viel Platz in Anspruch nimmt.

Nach einer ersten Weiterbildung ist zur Adaptereinrichtung vorzugsweise vorgesehen, dass der an die Anschlagsplatte angepasste Abschnitt als Anlagebereich zur Anlage der Adaptereinrichtung an der Anschlagsplatte des Schuhleistens ausgebildet ist, wobei der Anlagebereich zur Ausbildung der Anschlagsplatte korrespondierende Durchbrüche oder Vorsprünge hat. Das Korrespondieren von Durchbrüchen der Adaptereinrichtung und der Ausbildung der Anschlagsplatte ermöglicht zum Beispiel den Einsatz gemeinsamer Befestigungsmittel, beispielsweise gemeinsamer Schrauben. Dabei können bereits vorhandene Befestigungsmittel der Anschlagsplatte eingesetzt werden, es können aber aufgrund der erhöhten Bauhöhe auch alternative Befestigungsmittel eingesetzt werden, zum Beispiel längere Schrauben mit gleichem Durchmesser.

An der Adaptereinrichtung können auch Vorsprünge vorgesehen sein, diese können einstückig mit der Adaptereinrichtung ausgebildet sein oder auch als separates Bauteil, das an der plattenförmigen Adaptereinrichtung befestigt ist. Ein entsprechender Vorsprung kann beispielsweise in einen Durchbruch in der Anschlagsplatte eingesteckt werden. Anschlagsplatten und Schuhleisten haben regelmäßig einen derartigen Durchbruch für den Einsatz in der Schuhfertigung in verschiedenen Prozessen. Diese Bohrung wird durch den Vorsprung der Adaptereinrichtung ausgenutzt.

Nach einer Weiterbildung der erfindungsgemäßen Vorrichtung kann noch vorgesehen sein, dass im Bereich der Längsränder des Anlagebereiches aus der Ebene des Anlagebereiches vorstehende Randbereiche ausgebildet sind. Diese vorstehenden Randbereiche bilden schmale Grate aus, die nach Auflage der Adaptereinrichtung auf der Anschlagsplatte über die seitlichen Ränder der Anschlagsplatte hinausstehen. Es erfolgt somit ein Umgreifen des oberen Bereiches der Anschlagsplatte, so dass ein Verrücken in Richtung eines dieser Längsränder nicht möglich ist. Ein formschlüssiger Eingriff ist ausgebildet.

Der Anlagebereich für Werkzeugmaschinenaufnahmen an der Adaptereinrichtung ist nach einer Weiterbildung der Erfindung als eingeformter quaderförmiger Abschnitt ausgebildet. An einem derartigen quaderförmigen Abschnitt kann eine Werkzeugmaschinenaufnahme zum Beispiel klemmend angreifen. An einer freien Oberseite kann der quaderförmige Abschnitt einen Anschlag haben, um zum Beispiel das Aufschieben der Adaptereinrichtung auf eine Werkzeugmaschinenaufnahme zu begrenzen. Schließlich kann noch vorgesehen sein, dass in Seitenwänden des Quaders Hinterschneidungen für die Anlage einer Werkzeugmaschinenaufnahme ausgebildet sind. Dazu sind die Seitenwände des Quaders eingezogen, so dass sie schräg gestellt sind. Hinter diese Hinterschneidungen kann eine entsprechend kongruent ausgebildete Werkzeugmaschinenaufnahme greifen.

Ein Ausführungsbeispiel der Erfindung, aus dem sich weitere erfinderische Merkmale ergeben, ist in der Zeichnung dargestellt. Es zeigen:
- Figur 1:: eine perspektivische Ansicht eines Schuhleistens vor seiner Bearbeitung,
- Figur 2:: eine Seitenansicht einer Adaptereinrichtung zur Anlage an den Schuhleisten gemäß Figur 1,
- Figur 3:: eine Teilseitenansicht des Schuhleistens vor seiner Bearbeitung gemäß Figur 1 mit angelegter Adaptereinrichtung,
- Figur 4:: eine weitere perspektivische Ansicht der Adaptereinrichtung gemäß Figur 2,
- Figur 5:: eine Längsschnittansicht der Adaptereinrichtung nach Figur 4,
- Figur 6:: eine Schnittansicht entlang der Schnittlinie A-A in Figur 5 und
- Figur 7:: eine Schnittansicht eines Abschnitts der Adaptereinrichtung gemäß Figur 4.

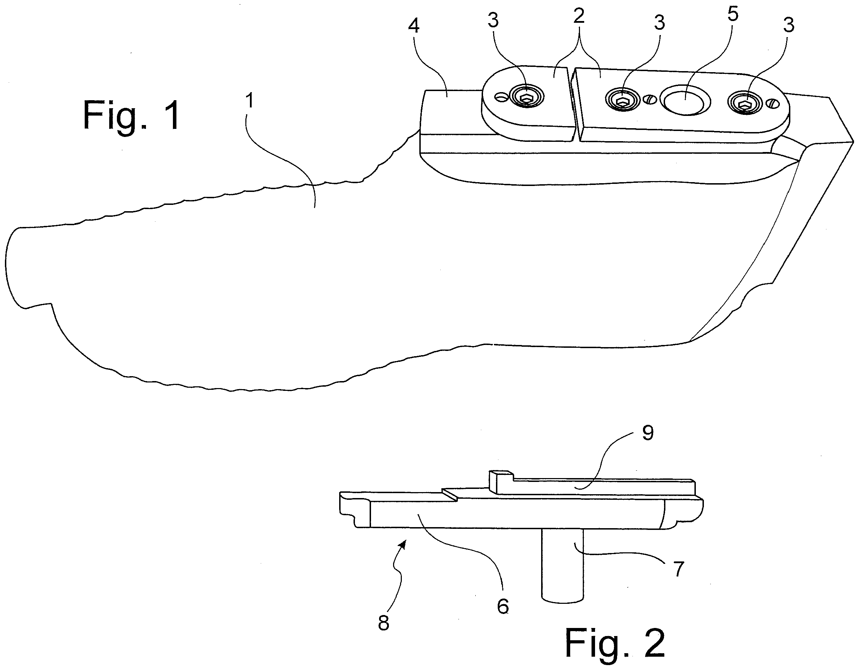

Der Schuhleisten 1 in Figur 1 liegt noch als nur vorbearbeitetes Grobmodel vor. Eine Bearbeitung in spanabhebender Weise zur Ausbildung des endgültigen Schuhleistens hat noch zu erfolgen. Der Schuhleisten 1 ist bereits mit einer zweiteiligen Anschlagsplatte 2 ausgerüstet. Diese Anschlagsplatte 2 verbleibt auf dem fertigen Schuhleisten 1, sie dient seiner späteren Handhabung. Die Anschlagsplatte 2 ist mit Schrauben 3 auf einem Sockelbereich 4 des Schuhleistens 1 befestigt.

Die Anschlagsplatte 2 hat in ihrem größeren Abschnitt noch einen Durchbruch 5, dieser dient später zum Ansetzen von Vorrichtungen bei der Benutzung des Schuhleistens 1.

Figur 2 zeigt die verfahrensgemäß vorgesehene Adaptereinrichtung. Die Adaptereinrichtung ist aus einem einteiligen plattenförmigen Baukörper 6 ausgebildet, an dem ein Vorsprung 7 angesetzt ist. Die Adaptereinrichtung hat zwei Anlagebereiche. Ein Anlagebereich 8 auf der Seite des Vorsprungs 7 dient zur Anlage der Adaptereinrichtung an der Anschlagsplatte 2. Ein Anlagebereich 9 auf der dem Vorsprung 7 abgekehrten Seite der Adaptereinrichtung ist für das Ansetzen einer Werkzeugmaschinenaufnahme ausgebildet.

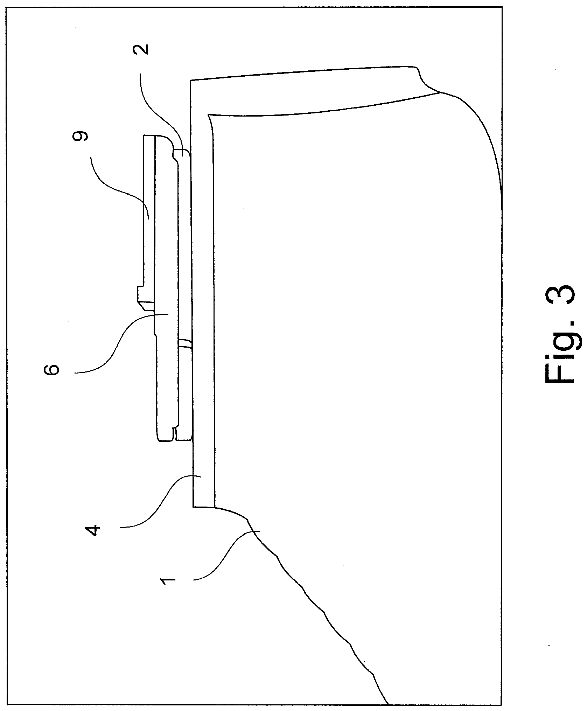

Figur 3 zeigt den Schuhleisten 1 mit dem Sockelbereich 4. Auf die Anschlagsplatte 2 ist jetzt der Baukörper 6 der Adaptereinrichtung aufgelegt. Der Vorsprung 7 der Adaptereinrichtung ist in den Durchbruch 5 eingesteckt, die Anlage der Adaptereinrichtung an der Anschlagsplatte 2 erfolgt eng und lagegerecht.

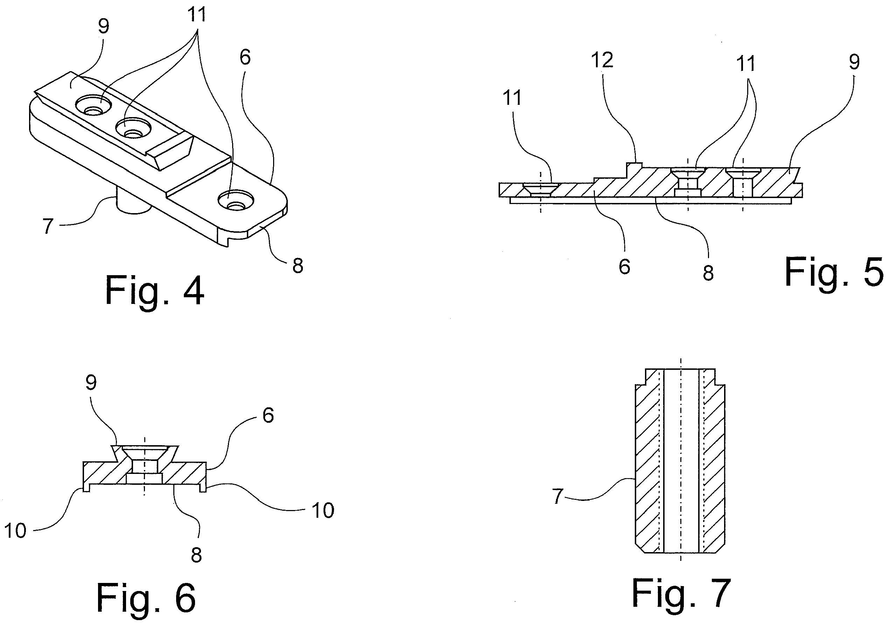

Figur 4 zeigt den Baukörper 6 der Adaptereinrichtung mit dem Vorsprung 7 und dem Anlagebereich 8 für die Werkzeugmaschinenaufnahme. Der Anlagebereich 9 ist als flacher Quader ausgebildet, er ist einstückig mit dem Baukörper 6 verbunden.

Figur 6 zeigt, dass die Seitenwände des Anschlagbereiches in Richtung des Baukörpers 6 nach innen eingezogen sind. Dadurch ist der Anlagebereich 9 mit Hinterschneidungen ausgerüstet, die eine Anlage einer Werkzeugmaschinenaufnahme ermöglichen. Figur 6 zeigt zudem, dass Randbereiche 10 vorstehend ausgebildet sind, so dass sie bei Anlage der Adaptereinrichtung an der Anschlagsplatte 2 die Anschlagsplatte überwölben. Durch diese Randbereiche 10 und den Vorsprung 7 wird bereits eine lagerichtige Zuordnung der Adaptereinrichtung zur Anschlagsplatte 2 ermöglicht.

Zur Fixierung dieser Lageeinrichtung sind Durchbrüche 11 vorgesehen, durch die Schrauben geführt werden können. Dabei ist eine Schraube auch durch den Vorsprung 7 führbar, bei den Schrauben kann es sich um die bereits vorhandenen Schrauben 3 der Anschlagsplatte 2 aus Figur 1 handeln oder um entsprechende Schrauben mit längeren Gewindeabschnitten.

Die Durchbrüche 11 sind auch in Figur 5 gezeigt. Figur 5 verdeutlicht, dass auch ein schmaler Längsrand des Anlagebereichs 9 einen Einzug aufweisen kann. Der Anlagebereich 9 ist noch mit einem Anschlag 12 ausgerüstet, dieser Vorsprung 12 ist im Bereich des inneren Endes des Anlagebereiches 9 angeordnet.

Figur 7 zeigt den Vorsprung 7, der als Hohlzylinder ausgebildet ist und so einerseits an dem Baukörper 6 befestigt wird und anderseits das Hindurchführen einer Schraube ermöglicht.

## Patentansprüche

1. Verfahren zum Herstellen von Schuhleisten jeweils aus einem Kunststoffkörper, der spanabhebend zu bearbeiten ist,
**dadurch gekennzeichnet,**
**dass** auf dem Kunststoffkörper vor dessen Bearbeitung Bauteile einer Anschlagsplatte (2) fest angeordnet werden und dass für die nachfolgende Bearbeitung eine Adaptereinrichtung für Werkzeugmaschinen eingesetzt wird, die lagefest an der Anschlagsplatte (2) befestigt wird.

2. Verfahren nach Anspruch 1, **dadurch gekennzeichnet, dass** eine Adaptereinrichtung mit einer zur Bauform der Anschlagsplatte (2) kongruenten Bauform verwendet wird.

3. Verfahren nach Anspruch 1 oder 2, **dadurch gekennzeichnet, dass** für die Befestigung der Adaptereinrichtung Befestigungsmittel der Anschlagsplatte (2) eingesetzt werden.

4. Adaptereinrichtung für die Herstellung von Schuhleisten jeweils aus einem Kunststoffkörper, der spanabhebend zu bearbeiten ist, wobei dem Kunststoffkörper eine Anschlagsplatte zugeordnet ist, insbesondere zur Verwendung in einem Verfahren nach Anspruch 1 bis 3,
**dadurch gekennzeichnet,**
**dass** sie als einteiliger plattenförmiger Baukörper (6) ausgebildet ist, der an die Anschlagsplatte (2) angepasste Abschnitte hat und der einen Anlagebereich (9) für Werkzeugmaschinenaufnahmen aufweist.

5. Adaptereinrichtung nach Anspruch 4, **dadurch gekennzeichnet, dass** der an die Anschlagsplatte (2) angepasste Abschnitt als Anlagebereich (8) zur Anlage der Adaptereinrichtung an der Anschlagsplatte (2) des Schuhleistens (1) ausgebildet ist, wobei der Anlagebereich (8) zur Ausbildung der Anschlagsplatte (2) korrespondierende Durchbrüche (11) oder Vorsprünge (7) hat.

6. Adaptereinrichtung nach Anspruch 5, **dadurch gekennzeichnet, dass** im Anlagebereich (8) der Adaptereinrichtung angeordnete Vorsprünge (7) als Hohlzylinder ausgebildet sind.

7. Adaptereinrichtung nach Anspruch 5 oder 6, **dadurch gekennzeichnet, dass** im Bereich der Längsränder des Anlagebereiches (8) aus der Ebene des Anlagebereiches (8) vorstehende Randbereiche (10) ausgebildet sind.

8. Adaptereinrichtung nach einem Ansprüche 4 bis 7, **dadurch gekennzeichnet, dass** der Anlagebereich (9) für Werkzeugmaschinenaufnahmen als eingeformter quaderförmiger Abschnitt ausgebildet ist.

9. Adaptereinrichtung nach Anspruch 8, **dadurch gekennzeichnet, dass** der quaderförmige Abschnitt auf seiner freien Oberseite einen Anschlag (12) hat.

10. Adaptereinrichtung nach Anspruch 8 oder 9, **dadurch gekennzeichnet, dass** in Seitenwänden des Anlagebereichs (9) Hinterschneidungen für die Anlage einer Werkzeugmaschinenaufnahme ausgebildet sind.
